(19) **Europäisches Patentamt**

**European Patent Office**

**Office européen des brevets**

(11) Numéro de publication : **0 108 317**
**B1**

(12) **FASCICULE DE BREVET EUROPÉEN**

(45) Date de publication du fascicule du brevet :
**10.09.86**

(21) Numéro de dépôt : **83110556.4**

(22) Date de dépôt : **22.10.83**

(51) Int. Cl.⁴ : **C 10 J  3/54**, C 10 J  3/12, C 10 B 49/22

(54) **Procédé de gazéification de produits ligno-cellulosiques et dispositif pour sa mise en oeuvre.**

(30) Priorité : **05.11.82 FR 8218735**

(43) Date de publication de la demande :
**16.05.84 Bulletin 84/20**

(45) Mention de la délivrance du brevet :
**10.09.86 Bulletin 86/37**

(84) Etats contractants désignés :
**AT BE CH DE GB IT LI LU NL SE**

(56) Documents cités :
**DE-A- 2 704 032**
**DE-C-   974 376**
**FR-A- 2 436 954**
**GB-A- 2 086 933**
**US-A- 3 853 498**

(73) Titulaire : **TUNZINI-NESSI ENTREPRISES D'EQUIPE-MENTS**
**1 place Honoré de Balzac**
**F-95100 Argenteuil (FR)**

(72) Inventeur : **Deglise, Xavier**
**28, rue Victor Hugo**
**F-54000 Nancy (FR)**
Inventeur : **Meunier, Georges**
**Villa Véronique 7, rue Lympio**
**F-06000 Nice (FR)**
Inventeur : **Schlicklin, Philippe**
**21, rue du Maréchal Gérard**
**F-54000 Nancy (FR)**

(74) Mandataire : **Guy, Claude et al**
**c/o Centre de Recherches de Pont-à-Mousson BP 28**
**F-54703 Pont-à-Mousson Cédex (FR)**

Jouve, 18, rue St-Denis, 75001 Paris, France

## Description

La présente invention a pour objet un procédé de pyrolyse rapide de produits ligno-cellulosiques, plus particulièrement de déchets forestiers et un dispositif pour sa mise en œuvre.

Dans l'industrie de la transformation du bois, les déchets constitués par les écorces, les copeaux, la sciure et les souches représentent jusqu'à 16 % en poids du bois utilisable. Compte tenu du renchérissement du coût de l'énergie, il apparaît donc judicieux de récupérer l'énergie contenue dans ces déchets.

Le moyen le plus répandu de récupération de l'énergie est la combustion de ces déchets dans des chaudières. On obtient ainsi de la vapeur qui est soit utilisée pour le chauffage, soit pour la production d'électricité. Mais cette solution présente des inconvénients. La chaudière doit être adaptée à la combustion des déchets, les foyers ont des dimensions importantes et les chaudières sont de grande taille. La puissance thermique fournie par ces chaudières est très difficilement modulable, ce qui entraîne un manque de souplesse qui ne permet pas d'adapter cette puissance aux besoins instantanés, la plupart du temps fluctuants, de l'utilisateur. Enfin, les fumées doivent être traitées avant leur rejet à l'atmosphère, ce qui entraîne l'installation d'appareils d'épuration souvent coûteux.

Un autre moyen plus évolué de récupération de l'énergie est la gazéification des déchets. Mais le gaz produit par ce procédé a un faible pouvoir calorifique inférieur ou PCI, de l'ordre de 1 000 à 3 000 Kcal/Nm$^3$ seulement, en raison de la dilution par du dioxyde de carbone et/ou de l'azote et ce gaz est beaucoup mieux adapté à des usages de synthèse organique en raison de ses teneurs en hydrogène et monoxyde de carbone. En outre les gazogènes utilisés actuellement pour la gazéification présentent de nombreux inconvénients. Certains de ces inconvénients sont liés au fait que la transformation du combustible solide en gaz sous l'action de l'air ou de l'oxygène et éventuellement de la vapeur d'eau a lieu le plus souvent en même temps qu'une pyrolyse alors que pour produire un gaz parfaitement épuré, elle ne devrait s'effectuer qu'après la pyrolyse et le craquage des produits de pyrolyse. De ce fait, des produits incomplètement transformés polluent le gaz obtenu et le rendent impropre à une utilisation directe sans un traitement spécial.

On connaît par le brevet US-A-3 853 498 un procédé de pyrolyse de déchets tels que les ordures ménagères, les déchets de bois, les déchets agricoles, les boues de station d'épuration. Dans ce procédé, on introduit les déchets dans un premier lit fluidisé d'un solide inerte et chaud dans lequel ils subissent une pyrolyse rapide produisant un gaz combustible et un résidu solide carboné. Ce dernier est transféré et brûlé dans un second lit fluidisé, alimenté par surverse du premier lit fluidisé, ce qui réchauffe le solide inerte le composant qui, par surverse, alimente le premier lit fluidisé.

On connaît aussi par le brevet DE-A-27 04 032 un procédé de gazéification de matières solides carbonées utilisant un réacteur contenant un garnissage sur toute sa hauteur. Les matières solides à gazéifier sont introduites à la partie inférieure du réacteur et fluidisées par un fluide gazeux. Les calories nécessaires à la gazéification sont apportées par un fluide caloporteur granulaire introduit à la partie supérieure du réacteur. Un second réacteur, analogue au premier et couplé à celui-ci, est utilisé pour la combustion du résidu solide carboné produit par la gazéification et assure le chauffage du fluide caloporteur qui circule à contre-courant des fumées de combustion.

L'invention a pour objet un procédé de pyrolyse rapide à l'abri de l'air de produits ligno-cellulosiques, évitant les inconvénients précités, fournissant un gaz riche, propre, de pouvoir calorifique inférieur compris entre 4 000 et 5 000 Kcal/Nm$^3$, constituant une excellente source d'énergie commodément distribuable.

Suivant l'invention, le procédé de pyrolyse rapide de produits ligno-cellulosiques en fragments de faibles dimensions, dans lequel les produits ligno-cellulosiques sont introduits dans un lit fluidisé de particules réfractaires chaudes constituant un milieu chauffant les transformant en produits de pyrolyse constitués de gaz, de goudrons et de résidu solide carboné, l'énergie calorifique nécessaire à la pyrolyse étant fournie par la combustion du résidu solide carboné est caractérisé en ce que :

les goudrons sont craqués en fractions gazeuses lors de la traversée d'une zone de surchauffe, située au-dessus du lit fluidisé et espacée de celui-ci, constituée par un échangeur à garnissage alimenté par une pluie de particules réfractaires chaudes ;

le résidu solide carboné est séparé des produits gazeux de pyrolyse puis brûlé dans un réacteur de combustion à lit transporté, assurant le chauffage des particules réfractaires et leur transport vers l'échangeur à garnissage et le lit fluidisé.

Ainsi, grâce au procédé objet de l'invention, on obtient un gaz épuré, de pouvoir calorifique élevé, pouvant être facilement distribué aux utilisateurs.

· Les gaz produits, après séparation du résidu solide carboné, peuvent être refroidis pour récupérer une partie de leur chaleur sensible qui sera utilisée, le cas échéant, pour le séchage des produits ligno-cellulosiques préalablement à leur introduction dans le lit fluidisé.

Les fumées de la combustion du résidu solide carboné dans le lit transporté peuvent être utilisées pour réchauffer l'air de combustion de ce résidu.

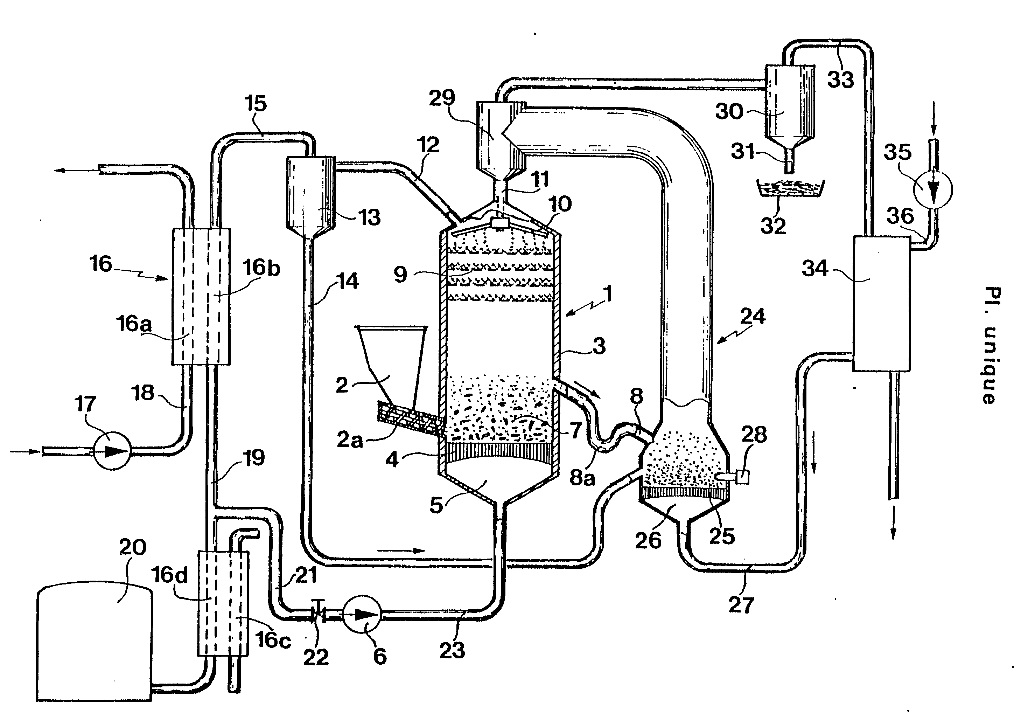

L'invention sera décrite plus en détail en se référant à la figure unique qui est un schéma de principe illustrant le procédé de gazéification de produits ligno-cellulosiques selon l'invention.

Les produits ligno-cellulosiques sous forme de fragments de faibles dimensions sont introduits dans un pyrolyseur 1 par une trémie d'alimentation 2 munie d'un sas et d'un dispositif d'alimentation à vis 2a.

Le pyrolyseur 1 est constitué par un dispositif analogue à celui décrit dans le brevet FR 2 436 954. Il comprend une colonne cylindrique 3 garnie de briques réfractaires comportant à sa partie inférieure une grille de fluidisation 4 au-dessous de laquelle se trouve une boîte à vent 5 alimentée en gaz de fluidisation par un compresseur 6.

La grille 4 supporte un lit 7 de particules fluidisées, constituant un milieu chauffant, dont l'excédent est évacué par un trop-plein latéral 8, muni d'un siphon 8a.

La partie supérieure de la colonne comprend un échangeur à garnissage 9 à pluie de particules réfractaires chaudes. Dans l'exemple de réalisation décrit, il comporte quatre étages constitués chacun d'un caillebotis à grandes mailles ayant une ouverture de 93 % et supportant un empilement constitué d'anneaux Pall en acier réfractaire ayant une porosité de 94 %.

Un distributeur rotatif 10 de particules réfractaires répartit des particules sur toute la surface de l'étage le plus élevé. Les particules sont amenées dans le distributeur 10 par un conduit 11.

La colonne comporte au-dessus de l'étage le plus élevé un conduit 12 d'évacuation des gaz produits conduisant ces derniers à un séparateur gaz-solide 13 muni de deux tuyauteries : l'une 14 pour l'évacuation des produits solides captés, l'autre 15 conduisant les gaz épurés à un échangeur air-gaz 16. Un compresseur 17 alimente en air de refroidissement l'un des circuits 16a de l'échangeur 16 par une conduite 18.

L'autre circuit 16b de l'échangeur 16 est relié par une conduite 19 à une enceinte de stockage 20 des gaz produits. Une canalisation 21 piquée sur la conduite 19 munie d'un organe de réglage de débit 22 permet de recycler une partie des gaz produits par l'intermédiaire du compresseur 6 relié à la boîte à vent 5 du pyrolyseur 1 par une conduite 23.

Un second échangeur 16C-16d est installé sur la conduite 19, entre le piquage de la conduite 21 et l'enceinte de stockage 20.

Un réacteur de combustion 24 à lit transporté chauffant, adjacent au pyrolyseur 1, est relié à celui-ci par le trop-plein latéral 8 du lit fluidisé 7. Il comporte à sa partie inférieure, en dessous de l'arrivée du trop-plein 8, une grille de fluidisation 25 au-dessous de laquelle se trouve une boîte à vent 26 alimentée par une canalisation 27. Un brûleur de préchauffage 28 est placé au-dessus de la grille 25 dans la paroi latérale du réacteur 24. La tuyauterie d'évacuation 14 du séparateur gaz-solide 13 est reliée au réacteur 24 et débouche dans celui-ci au-dessus de la grille de fluidisation 25.

Le réacteur de combustion 24 se termine à sa partie supérieure par un séparateur gaz-solide 29 dont la partie inférieure ou sous-verse est en communication avec le conduit 11 d'alimentation du distributeur rotatif 10 de particules solides. Un second séparateur gaz-solide 30 est relié à la partie supérieure du premier séparateur 29. Il comporte deux conduites : l'une 31, inférieure, débouchant sur un cendrier 32, l'autre 33, supérieure, reliée à un échangeur 34 fumées-air.

Un compresseur 35 alimente en air frais l'échangeur 34 par une tuyauterie 36. La tuyauterie 27, dont l'une de ses extrémités débouche dans la boîte à vent 26 du réacteur de combustion 24, est raccordée à la sortie côté air de l'échangeur 34.

Le procédé de pyrolyse rapide de produits ligno-cellulosiques fonctionne, en régime permanent, selon le schéma suivant :

les produits ligno-cellulosiques, sous forme de fragments de faibles dimensions, sont introduits par la trémie d'alimentation 2 dans le milieu chauffant constitué par un lit fluidisé 7 de particules réfractaires dont la température est comprise entre 700 et 900 °C, où ils sont pyrolysés à l'abri de l'air. Les produits de pyrolyse, résidu solide carboné et produits ligno-cellulosiques incomplètement pyrolysés, goudrons et gaz sont entraînés vers le haut du pyrolyseur 1 par le gaz de fluidisation dont la vitesse est de l'ordre de 3 m/s. Ils traversent la zone de surchauffe 9, où les goudrons sont craqués en fractions plus légères, et quittent le pyrolyseur 1 à une température d'environ 800 °C par le conduit 12 qui les dirige dans le séparateur solide-gaz 13. Le gaz, débarrassé des produits solides, gagne l'échangeur 16 d'où il sort à une température de 300 °C environ. L'air de refroidissement des gaz sort de l'échangeur 16 à 600 °C environ et peut être utilisé pour le séchage préalable des déchets ligno-cellulosiques avant leur introduction dans le pyrolyseur 1.

Une partie du gaz refroidi est recyclée par le compresseur 6, l'organe de réglage 22, et les canalisations 21 et 23 dans la boîte à vent 5 du pyrolyseur 1 pour la fluidisation du lit 7.

L'autre partie de ce gaz est refroidie une seconde fois dans l'échangeur 16C-16d jusqu'à une température de 40 °C environ pour condenser la majeure partie de l'eau qu'il contient, puis gagne l'enceinte de stockage 20 par la conduite 19.

Le réacteur de combustion 24 sert à chauffer les particules réfractaires alimentant l'échangeur à garnissage 9 puis le lit fluidisé 7, par combustion des matières solides produites lors de la pyrolyse des produits ligno-cellulosiques dans le réacteur 1. Ces matières solides, captées dans le séparateur gaz-solide 13, constituées d'un résidu carboné analogue à du charbon de bois et des matières ligno-cellulosiques incomplètement transformées sont amenées dans le réacteur 24, au-dessus de la grille 25, par la tuyauterie 14. Les particules réfractaires en excès dans le lit fluidisé 7 ainsi que les particules les plus grosses de résidu solide carboné qui ne sont pas entraînées par le gaz de fluidisation sont transférées du pyrolyseur 1 au réacteur de combustion 24 par le trop-plein 8 muni d'un siphon 8a débouchant au-dessus de la grille 25. Enfin, l'air nécessaire à la combustion et au transport du lit est fourni par la tuyauterie 27 débouchant dans la boîte à vent 26.

Les températures sont de 955 °C environ à la partie inférieure du réacteur de combustion 24 à lit transporté, 950 °C environ à la partie supérieure du réacteur. La vitesse des fumées produites par la combustion est de 10 m/s environ.

Les fumées de combustion issues du réacteur de combustion 24 à lit transporté traversent un premier séparateur fumées-solide 29 qui les débarrasse des particules réfractaires réchauffées, lesquelles sont dirigées vers le distributeur rotatif 10 par le conduit 11. Un second séparateur gaz-solide 30, monté en série avec le premier séparateur 29, capte les cendres produites par la combustion du résidu carboné et des matières ligno-cellulosiques incomplètement transformées d'où elles sont évacuées dans le cendrier 32.

Les fumées de combustion épurées cèdent leur énergie thermique à l'air de combustion du réacteur de combustion 24 par un échangeur fumées-air 34 alimenté en air frais par le compresseur 35. L'air réchauffé est conduit dans le réacteur de combustion 24 par la tuyauterie 27. Les températures des fumées de combustion sont respectivement de 900 °C à l'entrée et 100 °C à la sortie de l'échangeur 34. La température de l'air de combustion est de 680 °C dans la boîte à vent 26.

Au démarrage de l'installation, les particules réfractaires sont chauffées dans le réacteur de combustion 24 à lit transporté par le brûleur 28 afin de les porter à une température suffisante pour permettre la pyrolyse dans le pyrolyseur 1.

L'exemple suivant illustre l'invention sans en limiter la portée :

Conditions de fonctionnement du pyrolyseur 1.

| | |
|---|---|
| Température du lit fluidisé | 800 °C |
| Vitesse des gaz au-dessus du lit | 3 m/s |
| Débit de particules réfractaires alimentant l'échangeur à garnissage et le lit fluidisé | 20 kg/s |
| Débit de gaz de fluidisation | 0,18 kg/s |
| Température du gaz de fluidisation | 300 °C |

Conditions de fonctionnement du réacteur de combustion 24.

| | |
|---|---|
| Température à la partie inférieure du réacteur | 955 °C |
| Température à la partie supérieure du réacteur | 950 °C |
| Vitesse des fumées de combustion dans le réacteur | 10 m/s |
| Débit d'air de combustion | 2,74 kg/s |
| Température de l'air de combustion à l'entrée de la boîte à vent du réacteur | 680 °C |

Pour les conditions de fonctionnement indiquées ci-avant, les résultats suivants sont obtenus :

| | |
|---|---|
| Débit de produits ligno-cellulosiques introduits dans le réacteur de gazéification (1 kg/s produits secs + 0,4 kg/s d'humidité). | 1,400 kg/s |
| Débit de gaz humide disponible comme source d'énergie | 1,188 kg/s |

Composition pondérale du gaz humide :

| | |
|---|---|
| $CO$ | 37,5 % |
| $CO_2$ | 6 % |
| $H_2$ | 1 % |
| $CH_4$ | 6,2 % |
| $C_2H_4$ | 5 % |
| $C_2H_6$ | 0,3 % |
| $C_2H_2$ | 0,7 % |
| $H_2O$ | 43,3 % |

| | |
|---|---|
| Pouvoir calorifique inférieur du gaz sec produit | 4 300 Kcal/Nm$^3$ |

Les avantages présentés par le procédé objet de l'invention sont les suivants :

Obtention d'un gaz riche à haut pouvoir calorifique (PCI compris entre 4 000 et 5 000 Kcal/Nm$^3$).

Le rendement, défini comme le rapport du contenu énergétique des produits fournis par la pyrolyse sur le contenu énergétique des produits ligno-cellulosiques introduits dans le pyrolyseur peut atteindre en pratique 70 %, valeur nettement supérieure à celles trouvées pour la gazéification à l'air ou à l'oxygène.

Le système mis en jeu dans le procédé est autorégulé et trouvera un point d'équilibre pour un fonctionnement stable. En effet, si la température de pyrolyse est par exemple trop basse, la proportion du résidu carboné augmente et par combustion de celui-ci la température des particules réfractaires sortant du réacteur de combustion à lit transporté augmente, ce qui remonte la température du lit fluidisé du pyrolyseur. Dans le cas où la température de pyrolyse est trop élevée, la proportion du résidu solide carboné diminue, ce qui entraîne une diminution de la température des particules réfractaires sortant du réacteur de combustion à lit transporté et, par conséquent, fait baisser la température du lit fluidisé du pyrolyseur.

Le procédé évite le mélange des gaz produits dans le pyrolyseur avec l'air de combustion et les fumées du réacteur de combustion.

Le procédé est susceptible de traiter toutes les catégories de déchets ligno-cellulosiques après

4

réduction en fragments de faibles dimensions, ce qui permet d'utiliser des bois impropres à l'industrie papetière et surtout les écorces pour lesquelles il existe peu d'utilisations.

Le procédé permet également de traiter des déchets agricoles tels que la paille, les cônes de maïs, etc... et des déchets forestiers tels que le bois de taillis.

Le procédé permet une économie d'énergie importée (pétrole, gaz) par production d'un gaz à un PCI tel qu'il est apte à de nombreux usages thermiques.

En variante, on peut envisager d'assurer la fluidisation du lit fluidisé 7 du pyrolyseur 1 par de la vapeur d'eau surchauffée.

**Revendications**

1. Procédé de pyrolyse rapide de produits ligno-cellulosiques en fragments de faibles dimensions dans lequel les produits ligno-cellulosiques sont introduits dans un lit fluidisé de particules réfractaires chaudes constituant un milieu chauffant les transformant en produits de pyrolyse constitués de gaz, de goudrons et d'un résidu solide carboné, l'énergie calorifique nécessaire à la pyrolyse étant fournie par la combustion du résidu solide carboné, caractérisé en ce que :

les goudrons sont craqués en fractions gazeuses lors de la traversée d'une zone de surchauffe, située au-dessus du lit fluidisé et espacée de celui-ci, constituée par un échangeur à garnissage alimenté par une pluie de particules réfractaires chaudes ;

le résidu solide carboné est séparé des produits gazeux de pyrolyse puis brûlé dans un réacteur de combustion à lit transporté, assurant le chauffage des particules réfractaires et leur transport vers l'échangeur à garnissage et le lit fluidisé.

2. Procédé suivant la revendication 1 caractérisé en ce que la vitesse des gaz entre le lit fluidisé et la zone de surchauffe est de l'ordre de 3 mètres par seconde.

3. Procédé suivant l'une des revendications 1 et 2 caractérisé en ce que la vitesse des fumées produites par la combustion du résidu solide carboné dans le réacteur de combustion à lit transporté est de 10 mètres par seconde environ.

4. Procédé suivant l'une quelconque des revendications 1 à 3 caractérisé en ce que la température des fumées de combustion dans le réacteur de combustion à lit transporté est environ de 950 °C.

5. Procédé suivant l'une quelconque des revendications 1 à 4 caractérisé en ce que le gaz produit a un pouvoir calorifique inférieur compris entre 4 000 et 5 000 Kcal/Nm$^3$.

6. Dispositif pour la mise en œuvre du procédé suivant l'une quelconque des revendications 1 à 5, du type comprenant un réacteur de pyrolyse (1) couplé à un réacteur de combustion (24), tous deux étant en communication à leurs parties inférieures par un trop plein (8) du lit fluidisé (7) du pyrolyseur (1) débouchant dans le réacteur de combustion (24) au-dessus d'une grille (25), caractérisé en ce que le réacteur de combustion contient un lit de particules réfractaires chaudes, qui est transporté, par les gaz de combustion, jusqu'à la partie supérieure du réacteur de pyrolyse (1) où les particules sont mises en contact avec les goudrons résultant de la pyrolyse des déchets et véhiculés par le gaz de fluidisation.

7. Dispositif suivant la revendication 6, caractérisé en ce qu'au cours de leur transfert depuis le réacteur de combustion jusqu'au réacteur de pyrolyse, les particules réfractaires chaudes traversent un séparateur gaz-solides (29) avant d'alimenter la zone de surchauffe (9) où se produit le contact avec les goudrons contenus dans les gaz de fluidisation.

**Claims**

1. Method for the rapid pyrolysis of ligno-cellulose products in the form of fragments of small dimensions in which the ligno-cellulose products are introduced into a fluidized bed of hot refractory particles constituting a heating medium transforming them into pyrolysis products constituted by gas, tars and a solid carbonaceous residue, the calorific energy necessary for pyrolysis being provided by the combustion of the solid carbonaceous residue, characterised in that :

the tars are cracked into gaseous fractions on passing through a superheating area, situated above the fluidized bed and spaced apart from the latter, constituted by an exchanger comprising a lining supplied by a shower of hot refractory particles ;

the solid carbonaceous residue is separated from the gaseous products of pyrolysis then burnt in a combustion reactor comprising a conveyed bed, ensuring the heating of the refractory particles and their conveyance to the exchanger comprising a lining and the fluidized bed.

2. Method according to Claim 1, characterised in that the speed of the gases between the fluidized bed and the superheating area is of the order of approximately 3 metres per second.

3. Method according to one of Claims 1 and 2, characterised in that the speed of the fumes produced by the combustion of the solid carbonaceous residue in the combustion reactor comprising a conveyed bed is approximately 10 metres per second.

4. Method according to one of Claims 1 to 3, characterised in that the temperature of the combustion fumes in the combustion reactor comprising a conveyed bed is approximately 950 °C.

5. Method according to one of Claims 1 to 4, characterised in that the gas produced has a low calorific power comprised between 4 000 and 5 000 Kcal/Nm³.

6. Apparatus for carrying out the method according to one of Claims 1 to 5, of the type comprising a pyrolysis reactor (1) connected to a combustion reactor (24), both being connected at their lower ends by an overflow (8) from the fluidized bed (7) of the pyrolyser (1) opening into the combustion reactor (24) above a grille (25), characterised in that the combustion reactor contains a bed of hot refractory particles, which is conveyed, by the combustion gases, to the upper part of the pyrolysis reactor (1) where the particles are brought into contact with the tars resulting from the pyrolysis of the waste and conveyed by the fluidization gas.

7. Apparatus according to Claim 6, characterised in that during their transfer from the combustion reactor to the pyrolysis reactor, the hot refractory particles pass through a gas/solids separater (29) before being supplied to the superheating area (9) where contact with the tars contained in the fluidization gases occurs.

**Patentansprüche**

1. Verfahren zur schnellen Pyrolyse von Produkten aus Lignocellulose in Form von kleinen Bruchstücken, bei dem die Produkte aus Lignocellulose in ein Wirbelbett aus hitzefesten heißen Teilchen eingeführt werden, das eine erhitzende Umgebung bildet und sie in aus Gas bestehende Pyrolyseprodukte umwandelt, wobei die zur Pyrolyse benötigte Wärmeenergie von der Verbrennung des festen kohlenstoffhaltigen Rückstands geliefert wird, dadurch gekennzeichnet,

daß die Teerstoffe beim Durchqueren einer Überhitzungszone in Gasfraktionen aufgespalten werden, wobei sich die Überhitzungszone über dem Wirbelbett und in Abstand hiervon befindet und aus einem Austauscher mit Auskleidung besteht, der von einem Schauer aus heißen hitzefesten Teilchen gespeist wird,

daß der Kohlenstoffhaltige feste Rückstand von den gasförmigen Pyrolyseprodukten getrennt und dann in einem Verbrennungsreaktor mit transportiertem Bett verbrannt wird, daß die Erhitzung der hitzefesten Teilchen und ihrem Transport zum Austauscher mit Auskleidung und zum Wirbelbett sicherstellt.

2. Verfahren nach Anspruch 1, dadurch gekennzeichnet, daß die Geschwindigkeit der Gase zwischen dem Wirbelbett und der Überhitzungszone in der Größenordnung von etwa 3 Meter je Sekunde liegt.

3. Verfahren nach einem der Ansprüche 1 und 2, dadurch gekennzeichnet, daß die Geschwindigkeit der Rauchgase, die durch die Verbrennung des kohlenstoffhaltigen festen Rückstands im Verbrennungsreaktor mit transportiertem Bett erzeugt werden, etwa 10 Meter je Sekunde beträgt.

4. Verfahren nach einem der Ansprüche 1 und 3, dadurch gekennzeichnet, daß die Temperatur der Rauchgase der Verbrennung im Verbrennungsreaktor mit transportiertem Bett etwa 950 °C beträgt.

5. Verfahren nach einem der Ansprüche 1 bis 4, dadurch gekennzeichnet, daß das erzeugte Gas einen Brennwert von 4 000 bis 5 000 Kcal/Nm³ hat.

6. Vorrichtung zur Durchführung des Verfahrens nach einem der Ansprüche 1 bis 5 von der Bauart mit einem mit einem Verbrennungsreaktor (24) gekoppelten Pyrolysereaktor (1), die alle beide an ihren Unterteilen durch einen Überlauf (9) des Wirbelbetts (7) des Pyrolysators (1) in Verbindung stehen, der über einem Gitter (25) in den Verbrennungsreaktors (24) mündet, dadurch gekennzeichnet, daß der Verbrennungsreaktor ein Bett aus heißen hitzefesten Teilchen enthält, das von den Verbrennungsgasen zum Oberteil des Pyrolysereaktors (1) transportiert wird, wo die Teilchen mit den Teerstoffen in Verbindung gebracht werden, die aus der Pyrolyse der Abfälle entstehen und vom Wirbelgas mitgeführt werden.

7. Vorrichtung nach Anspruch 6, dadurch gekennzeichnet, daß die heißen hitzefesten Teilchen im Verlauf ihrer Übertragung vom Verbrennungsreaktor bis zum Pyrolysereaktor einen Gas-Feststoff-Separator (29) durchqueren, bevor sie die Überhitzungszone (9) speisen, wo die Berührung mit den in den Wirbelgasen enthaltenen Teerstoffen erfolgt.

Pl. unique